(19) Europäisches Patentamt
European Patent Office
Office européen des brevets

(11) **EP 2 798 304 B1**

(12) **FASCICULE DE BREVET EUROPEEN**

(45) Date de publication et mention
de la délivrance du brevet:
**27.06.2018 Bulletin 2018/26**

(21) Numéro de dépôt: **12821285.9**

(22) Date de dépôt: **26.12.2012**

(51) Int Cl.:
*G01B 5/20* *(2006.01)*    *G01B 7/13* *(2006.01)*
*G01B 7/12* *(2006.01)*    *G01B 5/12* *(2006.01)*
*G01B 5/08* *(2006.01)*    *G01B 21/14* *(2006.01)*
*G01B 21/10* *(2006.01)*   *G01B 11/12* *(2006.01)*
*G01B 11/08* *(2006.01)*

(86) Numéro de dépôt international:
**PCT/FR2012/000551**

(87) Numéro de publication internationale:
**WO 2013/098493 (04.07.2013 Gazette 2013/27)**

(54) **DISPOSITIF DE MESURE D'UN PROFIL INTERNE OU EXTERNE D'UN COMPOSANT TUBULAIRE**

VORRICHTUNG ZUR MESSUNG EINES EXTERNEN ODER INTERNEN PROFILS EINES ROHRFÖRMIGEN BAUTEILS

DEVICE FOR MEASURING AN INTERNAL OR EXTERNAL PROFILE OF A TUBULAR COMPONENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.12.2011 FR 1104149**

(43) Date de publication de la demande:
**05.11.2014 Bulletin 2014/45**

(73) Titulaires:
• **VALLOUREC OIL AND GAS FRANCE**
**59620 Aulnoye-Aymeries (FR)**
• **Nippon Steel & Sumitomo Metal Corporation**
**Tokyo 100-8071 (JP)**

(72) Inventeurs:
• **MOREAU, Régis**
**F-59440 Avesnes sur Helpe (FR)**
• **MARTIN, Pierre**
**F-59770 Marly (FR)**

(74) Mandataire: **de Kernier, Gabriel**
**Cabinet Netter**
**Conseils en Propriété Industrielle**
**36, avenue Hoche**
**75008 Paris (FR)**

(56) Documents cités:
**US-A- 4 297 034    US-A- 4 521 968
US-A- 4 821 425    US-A- 5 485 678**

**Description**

La présente invention concerne un dispositif de mesure d'un profil interne ou externe d'un composant tubulaire. Elle s'applique plus particulièrement mais non exclusivement à la mesure du profil interne ou externe de composants tubulaires destinés à l'exploitation pétrolière ou gazière.

Un tel composant tubulaire comprend généralement une extrémité filetée de type mâle ou femelle apte à être vissée avec une extrémité respectivement de type femelle ou mâle d'un autre composant tubulaire. La présence de défauts d'épaisseur ou de circularité de ces tubes est donc particulièrement critique notamment pour assurer un couplage satisfaisant des composants entre eux. Ainsi, la présence de tels défauts peut générer de la fatigue et donc des fissures dans les composants tubulaires, au niveau du couplage des composants tubulaires défectueux. En outre, ces défauts dimensionnels risquent de provoquer des problèmes d'étanchéité car les interférences radiales au niveau des portées d'étanchéité et des filetages n'ont pas les valeurs optimales pour assurer l'étanchéité du couplage. Enfin, lorsque les filetages ont des dimensions dépassant les tolérances dimensionnelles désirées, il y a un risque de rupture de la colonne de tubes lors de l'exploitation du puits.

Par conséquent, de tels composants tubulaires font l'objet de contrôle de qualité après leur fabrication. Le contrôle consiste essentiellement en une mesure de diamètres notamment en vue d'une détection d'ovalité. Des composants présentant de tels défauts doivent donc être identifiés pour être éventuellement rejetés.

Il est nécessaire de vérifier que les caractéristiques dimensionnelles des composants ainsi fabriqués respectent un ensemble de tolérances acceptables prédéfinies. Ces opérations de contrôle sont essentielles pour permettre d'identifier tout composant tubulaire défectueux et devant être rejeté. Ces opérations de contrôle de qualité doivent être les plus précises possibles, répétables et efficaces.

Il est déjà connu dans l'état de la technique, un outil de calibrage, permettant la mesure de diamètres internes ou externes d'un composant tubulaire. Cet outil comprend un support portant deux organes de contact : un fixe et un mobile. Le support est agencé de manière à ce que les deux organes de contact soient disposés l'un en face de l'autre sur le composant à tester et à une distance réglable pour permettre une adaptation de l'outil en fonction du diamètre du composant. Ainsi, l'opérateur règle au préalable la distance séparant les deux organes sur un composant étalon ayant un profil idéal et dispose le support sur le composant à tester. Un indicateur à aiguille permet de lire le résultat de la mesure correspondant au déplacement de l'organe mobile de contact par rapport à la mesure de référence effectuée lors de l'étalonnage.

Pour détecter un défaut de circularité, l'opérateur tourne l'outil dans un même plan axial, autour du composant tubulaire, pour déterminer un diamètre minimal et un diamètre maximal. Si l'écart entre ces deux mesures est trop important par rapport aux tolérances souhaitées, le composant est alors rejeté. L'inconvénient de cet outil est qu'il nécessite que l'opérateur soit expérimenté pour réaliser une mesure fiable et reproductible. En effet, la rotation de l'outil autour du composant nécessite une grande habitude pour maintenir l'outil dans le plan axial ainsi que sur un diamètre du cercle et non sur une corde d'un arc de ce cercle. Ainsi, les mesures varient d'un opérateur à l'autre selon l'expérience de ce dernier et sont donc peu fiables.

On connaît encore dans l'état de la technique, notamment du document EP 2194 358, un dispositif de mesure comprenant un capteur optique monté sur un support, le support étant fixé sur un banc. Ce dispositif est par conséquent peu adapté pour réaliser des mesures rapides et efficaces de différents composants tubulaires au vu notamment de la complexité de mise en oeuvre. US-A-4 821 425 décrit un dispositif de mesure de diamètre, US-A-4 297 034 décrit un dispositif de mesure de contour, US-A-5 485 678 décrit un dispositif de mesure d'excentricité, US-A-4 521 968 décrit un dispositif de mesure de profil interne. Ainsi, il existe un besoin de fournir un dispositif de mesure, notamment de profils internes ou externes de composants tubulaires, étant facile à manipuler et à transporter, permettant des mesures fiables et indépendantes de l'opérateur effectuant les mesures.

A cet effet, l'invention a pour objet un dispositif de mesure d'un profil externe ou interne d'une portion d'extrémité d'un composant tubulaire, tel que revendiqué dans la revendication 1. Grâce à l'invention, du fait que le support est fixé par des moyens de liaisons libérables, il est simple de déplacer le dispositif de mesure d'un composant à l'autre. Par ailleurs, le dispositif est intégralement porté, grâce au support particulier selon l'invention, par le composant tubulaire à mesurer. Ainsi, le corps principal du dispositif est apte à être directement fixé par les moyens de fixation au composant.

De préférence, le support est porté par le composant à mesurer.

Par ailleurs, la fiabilité des mesures est indépendante de l'opérateur puisque, une fois le support fixé au composant, il suffit de mettre en rotation l'arbre qui entraînera en rotation avec lui les capteurs de mesures radiales et angulaires. Ces deux mesures qui déterminent parfaitement un point dans un repère de coordonnées polaires permettent de remonter à un profil externe (respectivement interne) du composant. La précision en est donc accrue.

En outre, le dispositif est facilement transportable d'un composant à l'autre grâce notamment aux moyens de liaison libérables avec lesquels le support est fixé au composant.

De préférence, le premier capteur est de type avec ou sans contact, par exemple de type inductif ou de type à détection optique. Le réglage en translation axiale et radiale du premier capteur facilite l'adaptation du dispositif de mesure à différentes diamètres de tubes mais également pour un même tube une adaptation du dispositif à des mesures de profils interne ou externe du composant.

De préférence, le dispositif comprend un moyen d'actionnement pour entraîner l'arbre en rotation de type à manivelle. Cet agencement simple permet à un opérateur quelconque d'utiliser le dispositif sans aucune connaissance préalable. Par ailleurs, grâce à l'invention, l'opérateur a une grande tolérance quant à la vitesse de rotation de l'arbre et de l'accélération. Ce dispositif est donc très facile à mettre en oeuvre.

De préférence, le corps principal comprend un montant le long duquel les moyens de liaison libérables sont réglables en position. De même, grâce à ces moyens de réglage, il est aisé d'adapter le dispositif de mesure aux différents types de tubes existants.

De préférence, les moyens de liaisons libérables comprennent des pattes de serrage aptes à serrer le composant de l'intérieur ou de l'extérieur. Ainsi, lors de mesures de profil interne (respectivement externe), la présence des moyens de liaisons ne perturbe pas la trajectoire du premier capteur. En **variante, les moyens de liaison peuvent être du type à aimantation ou encore du type à clip.**

De préférence, le dispositif comprend des moyens de communication avec une unité de calcul d'un profil à deux dimensions à partir des mesures radiales et angulaires fournies respectivement par les premier et deuxième capteurs.

Dans un mode de réalisation préféré, le deuxième capteur comprend un premier élément fixe solidaire du corps principal et un deuxième élément, monté sur l'arbre de rotation, mobile en rotation par rapport au premier élément. **Ainsi, le deuxième capteur, tout comme le premier capteur, est également monté sur le support.**

De préférence, le deuxième capteur est un codeur rotatif incrémental.

L'invention a encore pour objet un procédé de mesure d'un profil interne (respectivement externe) d'une portion d'extrémité (14) d'un composant tubulaire au moyen d'un dispositif selon l'invention, tel que revendiqué dans la revendication 9. De préférence, on reproduit une série de mesures dans plusieurs plans le long de l'axe principal du composant tubulaire. Ainsi, on peut déterminer le profil en trois dimensions du composant tubulaire.

Dans un mode de réalisation préféré, on réalise, à partir des séries de mesures obtenues dans différents plans, un modèle numérique du profil interne ou externe du composant tubulaire à l'aide d'un programme d'ordinateur et on effectue un calcul par éléments finis sur le modèle numérique pour déterminer le comportement du composant en fonction d'au moins une contrainte physique.

D'autres caractéristiques et avantages de l'invention apparaîtront à la lumière de la description qui suit, faite en référence aux dessins annexés dans lesquels :

- la figure 1 représente une vue en perspective d'un composant tubulaire et d'un dispositif de mesure selon l'invention dans une première configuration du dispositif de mesure ;
- la figure 2 représente une vue arrachée en perspective du dispositif de la figure 1 ;
- la figure 3 représente une vue en coupe transversale du composant et du dispositif de la figure 1;
- la figure 4 représente une vue en perspective du dispositif de mesure de la figure 1 dans une deuxième configuration du dispositif de mesure ;
- la figure 5 représente une vue schématique d'un profil externe du composant tubulaire des figures 1 à 3 dans un plan de mesure P représenté sur la figure 4 ;
- la figure 6 est un graphique de résultat montrant le contour du profil externe d'un composant tubulaire obtenu à partir du dispositif de mesure selon l'invention.

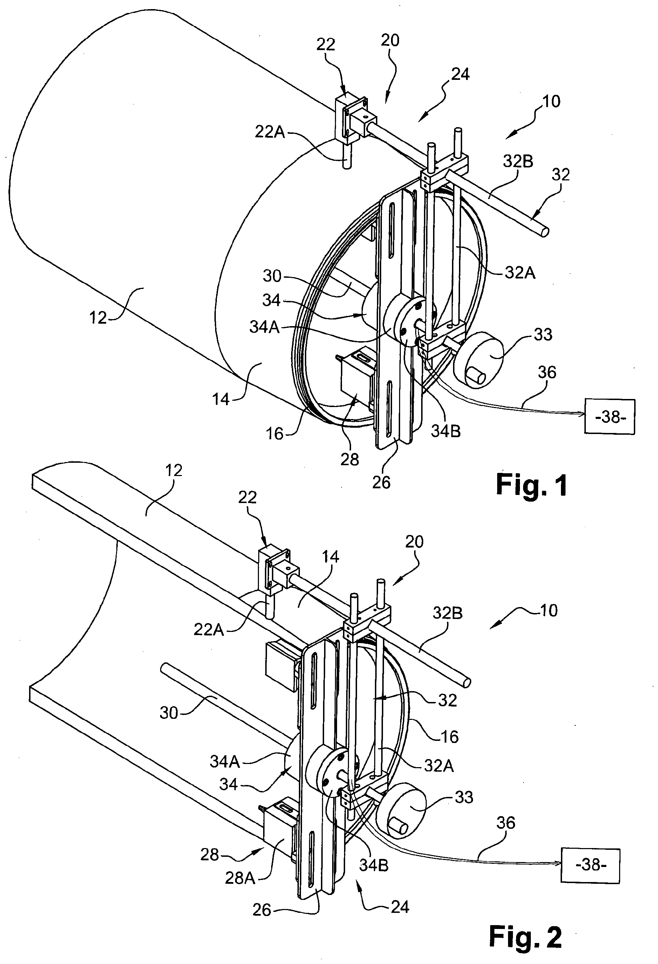

On a représenté sur **les figures 1 à 4** une installation de contrôle d'un composant tubulaire. Cette installation est désignée par la référence générale 10.

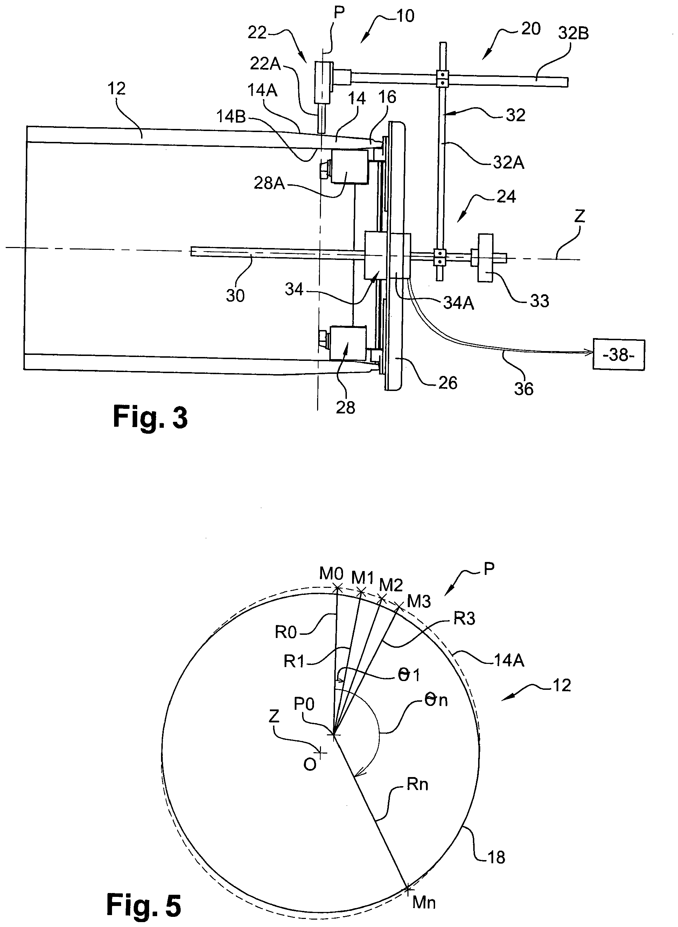

Dans cet exemple décrit, l'installation 10 est destinée à contrôler un composant tubulaire 12 comprenant une portion d'extrémité 14 avec des profils externe 14A et interne 14B. La portion d'extrémité 14 de ce composant 12 est généralement filetée pour permettre le couplage par vissage avec un autre composant tubulaire (non représenté). Dans l'exemple illustré par les figures, le composant tubulaire 12 comprend une extrémité mâle 16. Ce composant tubulaire a généralement une longueur de plusieurs mètres. Ce composant tubulaire 12 comprend un corps de révolution autour d'un axe principal Z (**figure 3**). Le profil interne 14B (respectivement externe 14A) du composant 12 est défini comme étant une enveloppe du composant 12, c'est-à-dire une enveloppe interne (respectivement externe) du composant autour de l'axe Z du composant 12. Idéalement, le profil interne 14B ou externe 14A du composant 12 dans un plan orthogonal à l'axe est parfaitement circulaire. En réalité, ce contour n'est pas parfaitement circulaire et peut présenter notamment une ovalité, comme cela est illustré par **la figure 5.** Sur cette figure, le profil externe 14A idéal est représenté en trait en pointillé et le profil interne 14A réel représenté en trait continu. Le composant peut également présenter un défaut d'épaisseur radiale (non représenté).

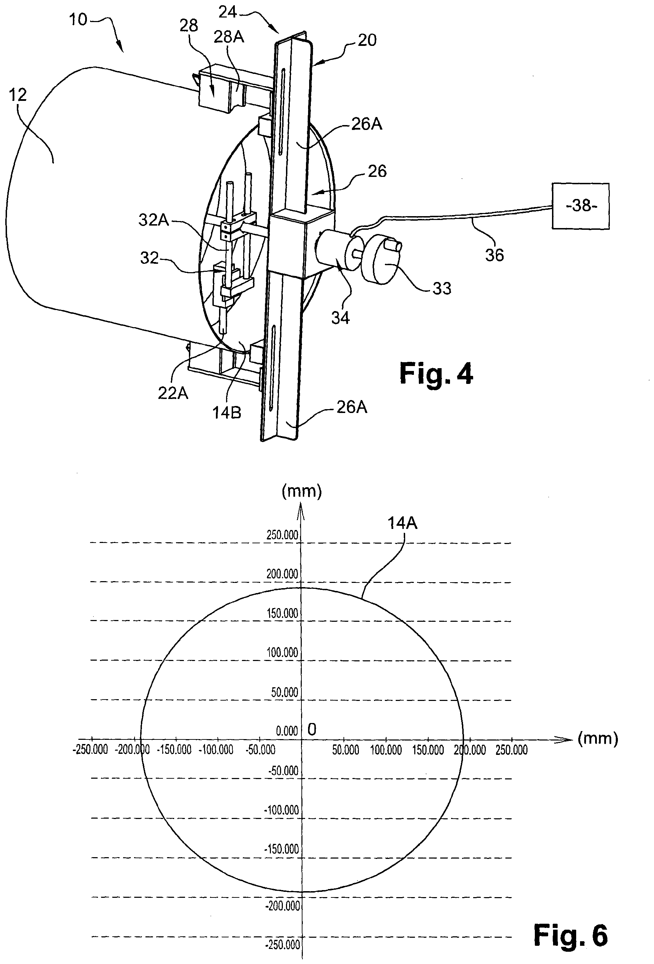

Comme cela est illustré sur **les figures 1 à 4**, l'installation de contrôle 10 comprend un dispositif de mesure 20 selon l'invention. Ce dispositif 20 est destiné à mesurer le profil externe 14A ou interne 14B de la portion d'extrémité 14 du composant 12. Dans une première configuration de mesure illustrée par **les figures 1 à 3**, le dispositif 20 est destiné à mesurer le profil externe 14A du composant 12. Dans une deuxième configuration de mesure illustrée par **la figure 4**, le dispositif 20 est destiné à mesurer le profil interne 14B du composant 12. On va maintenant détailler le dispositif 20 dans ces deux configurations. Sur ces figures, les éléments analogues sont désignés par des références identiques.

En particulier, ce dispositif 20 comprend un premier capteur 22 d'une mesure radiale du composant tubulaire 12 dans un plan orthogonal prédéfini à l'axe principal Z. On notera par la suite ce plan de mesure P. Ainsi, par mesure radiale, on entend une mesure d'une distance selon une direction radiale du composant tubulaire 12, c'est-à-dire une direction perpendiculaire à l'axe principal Z du composant 12, entre un point M de mesure sur le profil externe 14A (ou interne 14B) du composant 12 dans le plan et un point de référence des mesures PO également dans le plan P. On a ainsi représenté de façon schématique le profil externe 14A du composant 12 à contrôler dans le plan P de mesure sur **la figure 5.** Il est important de noter que le point de référence P0 des mesures effectuées avec le premier capteur 22 de mesures radiales peut ne pas être superposé avec le point central « O » du profil externe ou interne du composant 12. Ainsi, on voit sur **la figure 5** que le point « O » correspondant au centre géométrique du profil externe 14A représenté schématiquement, est distinct du point « PO » d'origine des mesures.

Le premier capteur 22 est destiné à être déplacé autour du profil externe 14A ou à l'intérieur du profil interne 14B pour effectuer des mesures radiales. A cet effet, le dispositif 20 comprend un support 24 apte à entraîner le premier capteur 22 selon une trajectoire circulaire prédéfini dans le plan de mesure P.

Dans l'exemple décrit, le capteur 22 est un capteur de type à contact, par exemple de type inductif. Le capteur 22 comprend de préférence une tête de mesure 22A apte à suivre le contour du profil externe 14A ou interne 14B du composant 12. Ce premier capteur 22 est par exemple un capteur inductif de déplacement linéaire qui fonctionne selon le principe de mesure différentielle. Il convient avec ce type de capteur à mesure différentielle d'effectuer un étalonnage préalable pour ensuite mesurer les variations de déplacement du capteur par rapport à une valeur de référence. Bien entendu, l'invention n'est pas limitée à ce type de capteurs et d'autres capteurs peuvent convenir à cette application, tels qu'un capteur optique, un capteur sans contact, etc.

Afin de permettre une manipulation aisée de ce dispositif 20, le support 24 comprend un corps principal 26 apte à être fixé par des moyens de fixation libérables 28 au composant 12. Dans l'exemple illustré sur **les figures 1 à 4,** le support 24 est fixé à un bord d'extrémité interne du composant tubulaire 12. Le dispositif 20 est donc avantageusement fixé au composant 12 et peut être facilement installé sur tout autre composant. Le support du dispositif de mesure est avantageusement intégralement accroché au composant. **Ainsi, le dispositif est intégralement porté par le composant tubulaire.**

De préférence et comme cela est illustré sur **les figures 1 à 4**, le corps principal 26 comprend un montant 26A, destiné à s'étendre selon une direction radiale du composant 12, le long duquel les moyens de liaison libérables 28 sont réglables en position. Ceci permet d'adapter le dispositif 20 aux dimensions des différents composants tubulaires. Par ailleurs, de préférence, les moyens de liaisons libérables 28 comprennent des pattes 28A de serrage aptes à serrer le composant 12 de l'intérieur ou de l'extérieur. Ceci permet de faciliter l'adaptation du dispositif 20 d'une configuration de mesure à l'autre du dispositif.

Dans l'exemple illustré pour la mesure du profil externe, puisque les pattes de serrage 28A serrent le composant 12 de l'intérieur, la trajectoire circulaire du premier capteur 22 autour du composant tubulaire 12 n'est absolument pas gênée par la présence de ces pattes de serrage 28A et donc plus généralement par les moyens de liaisons libérables 28 qui sont à l'intérieur du composant 12. En revanche, sur **la figure 4**, on voit au contraire que les pattes 28A serrent le composant 12 de l'extérieur ce qui permet un libre parcours du capteur 22 à l'intérieur du composant 12.

Afin de permettre l'entraînement en rotation du capteur de mesures radiales 22, le dispositif 20 comprend un arbre 30 de rotation sur lequel est fixé un bras 32 portant le premier capteur 22. De préférence, dans le mode de réalisation préféré de l'invention, le dispositif 20 comprend un moyen 33 d'actionnement pour entraîner l'arbre 30 en rotation de type à manivelle. Ainsi, le dispositif de mesure peut être mis en oeuvre par un opérateur par simple manipulation de la manivelle 33.

De préférence, le bras 32 est configuré pour permettre un réglage en translation axiale et radiale du capteur 22 par rapport au composant. Ainsi, dans l'exemple illustré sur **les figures 1 à 4**, le bras 32 comprend une première partie 32A s'étendant perpendiculairement à l'arbre 30 et solidaire de l'arbre 30. Pour la configuration de mesure particulière illustrée sur **les figures 1 à 3,** le bras 32 comprend une deuxième partie 32B qui s'étend parallèlement à l'arbre 30 sur laquelle est monté le premier capteur 22. De préférence, cette deuxième partie 32B est mobile en translation axialement et radialement par rapport à la première partie 32A.

En revanche, dans la deuxième configuration de mesure illustrée par la **figure 4**, le capteur 22 est directement monté sur la première partie 32A. Cette première partie 32A est de préférence réglable en position axiale le long de l'arbre de rotation 30.

Le bras 32 est formé par exemple par un ensemble de plaquettes et tiges assemblées entre elles. On voit notamment que la première partie 32A du bras 32 est formée par deux tiges et est fixée à l'arbre par une paire de plaquettes, chaque plaquette comprenant deux trous traversant pour chacune des tiges et une rainure centrale configurée de manière à ce que les deux plaquettes prennent en étau l'arbre de rotation dans l'espace formée par les deux rainures. Bien entendu, d'autres formes et types d'éléments pourront être utilisés pour fabriquer le bras.

Le premier capteur 22 peut être également déplacé axialement le long du composant tubulaire 12 pour effectuer des mesures de contour de tubes dans plusieurs plans de mesures successifs selon l'axe principal Z. Par ailleurs, le capteur 22 peut être également réglé en position selon une direction radiale, ceci d'une part pour permettre une adaptation du dispositif de mesure 20 aux différents diamètres de composants tubulaires existants mais également pour permettre d'adapter le dispositif en fonction des variations axiales du profil interne 14B ou externe 14A d'un même composant à contrôler, notamment pour tenir compte d'une éventuelle conicité du composant tubulaire B.

Par ailleurs, le dispositif 20 comprend un deuxième capteur 34 de mesure d'une position angulaire du premier capteur 22 pour chaque mesure radiale du premier capteur 22. Les mesures radiales et angulaires des premier 22 et deuxième 34 capteurs permettant de définir parfaitement le profil du composant 10 dans le plan prédéfini P en coordonnées polaires.

**De préférence, le deuxième capteur 34, tout comme le premier capteur 22, est également porté par le support 24.** Ce deuxième capteur 34 comprend par exemple un élément fixe 34A solidaire du corps principal du dispositif 10 et un élément mobile 34B par rapport à cet élément fixe 34A, solidaire de l'arbre de rotation 30. Ainsi, le deuxième capteur 34 est de préférence un codeur rotatif. L'élément mobile 34B est par exemple un disque solidaire de l'arbre 30.

En outre, les premier 22 et deuxième 34 capteurs de mesure sont reliés à des moyens de pilotage (non représentés) aptes à piloter les capteurs pour qu'ils effectuent des mesures radiale et angulaire synchronisées à une fréquence d'acquisition prédéterminée. Par exemple, la période d'acquisition des mesures est comprise entre 1 milliseconde et 1 seconde.

Par ailleurs, afin de permettre une analyse des résultats, le dispositif 20 comprend des moyens 36 de communication avec une unité de calcul 38 d'un profil interne ou externe à deux dimensions à partir des mesures radiales et angulaires. Ces moyens de communication 36 sont par exemple filaires. Toutefois, en variante, les moyens de communication 36 peuvent être de type sans fil.

Avec les mesures radiales R1 à Rn et les mesures angulaires correspondantes θ1 à θn, les points mesurés M1 à Mn sont parfaitement déterminés en coordonnées polaires dans le plan P. Il est ainsi possible de déterminer le profil en deux dimensions du composant tubulaire. L'origine de ce repère en coordonnées polaires est la référence des mesures « PO » sur **la figure 5.**

La détermination de l'ovalité est obtenue à partir des mesures relevées après un tour complet selon la trajectoire circulaire prédéfinie par les calculs suivants en référence au graphique schématique de **la figure 5.**

En particulier, le calcul de la position du point central du profil interne ou externe du composant, noté O(x, y) à partir d'un nombre n de points de mesure Mi (ri, θi) est effectué comme suit, en assimilant ce point central au barycentre des points Mi du profil interne ou externe :

$$O(x) = \sum_{i=1}^{n} \frac{xi}{n} \quad avec \quad xi = r_i(\theta_i)\cos\theta_i \quad \theta \; allant \; de \; 0° \; à \; 360°$$

$$x = r(\theta)\cos\theta$$

$$O(y) = \sum_{i=1}^{n} \frac{yi}{n} \quad avec \quad yi = r_i(\theta_i)\sin\theta_i$$

$$y = r(\theta)\sin\theta$$

En outre, les caractéristiques de l'ovale sont déterminées par recherche d'un diamètre minimum (Dmin) et d'un diamètre maximum (Dmax) :

$$D\min = Min(r_i(\theta) + r_i(\theta + \pi))$$

$$D\max = Max(r_i(\theta) + r_i(\theta + \pi))$$

L'ovalité se déduit de la formule :

$$Ovalité = \left\| D\min - D\max \right\|$$

Par ailleurs, dans une variante non illustrée par les figures, le dispositif 20 peut également comporter une pluralité de capteurs de mesure radiale du composant tubulaire. Par exemple, les capteurs supplémentaires sont portés par le bras 32 et sont répartis régulièrement le long de l'axe du composant 12. Ceci permet d'effectuer une mesure simultanée de différents diamètres le long de l'axe du composant tubulaire.

On va maintenant décrire les principales étapes d'un procédé de mesure d'un profil d'un composant tubulaire 12 au moyen du dispositif 20 selon l'invention. Sur les figures, on a illustré une étape de mesure d'un profil externe du composant tubulaire 12. Bien entendu, le procédé s'applique également à la mesure d'un profil interne (**figure 4**). Dans ce cas, contrairement aux illustrations des figures précédentes, les pattes de serrage 28A sont aptes à serrer le composant 12 sur un profil externe 14A du tube comme cela est visible sur **la figure 4.**

Au cours d'une première étape, un opérateur fixe le corps principal 26 du dispositif 20 de préférence au bord d'extrémité interne d'un composant étalon pour initialiser le capteur 22 à une valeur de référence. Puis, au cours d'une deuxième étape, l'utilisateur fixe le corps principal du dispositif 20 sur le composant 12 avec les moyens de liaisons libérables 28. Par exemple, on fixe le corps 24 sur le bord interne par serrage interne du composant tubulaire 12. Ainsi, les pattes de serrage 28A des moyens de liaisons 28 sont plaquées contre la paroi interne du composant tubulaire 12.

Par ailleurs, au cours de cette deuxième étape, l'opérateur positionne le corps 26 de manière également à ce que l'arbre de rotation 30 coïncide sensiblement avec l'axe principal Z du composant tubulaire 12. Un des avantages de l'invention est que le non alignement des axes du dispositif et du composant est sans effet sur le calcul des diamètres et de l'ovalité, comme cela ressort des formules de calcul ci-dessus. Ceci procure une grande souplesse dans la mise en oeuvre du dispositif, notamment en termes de tolérance de positionnement du dispositif de mesure.

Puis, au cours d'une troisième étape, l'opérateur met en rotation l'arbre 30 au moyen par exemple de la manivelle 33. Ceci permet de faire tourner le bras 32 portant le capteur 22 ainsi que le disque rotatif 34B du deuxième capteur 34. Au préalable de cette étape, l'opérateur définit une période de mesure, par exemple 10ms, le nombre de points de mesure étant ainsi lié directement à cette période de mesure définie au préalable et à la durée d'un tour.

Cette troisième étape permet de collecter une pluralité de mesures radiales en fonction d'un angle du composant tubulaire 12. Le nombre de points de mesure est dans cet exemple défini par la fréquence d'acquisition et la durée d'un tour. Par exemple, pour une durée de tour de 20 secondes et une période d'acquisition de 10ms, le dispositif permet l'acquisition de 2000 points de mesure.

Au cours d'une dernière étape, on calcule avec des moyens informatiques selon les opérations de calcul décrites précédemment, le profil externe 14A du composant tubulaire 12 dans le plan axial P de mesure à partir des mesures radiales et angulaires collectées. On obtient donc le graphique de la **figure 6** représentant le profil externe 14A du composant tubulaire 12. Ce profil externe 14A a été centré sur le point central « O » déterminé conformément aux calculs précédemment décrits. Les résultats de l'exploitation des mesures sont les suivants :

Dmin = 387, 949 mm
Dmax = 388,142 mm
Diamètre théorique = 388.055 mm

$$Ovalité = \left\| D\min - D\max \right\| = 0.193\, mm$$

Dans cet exemple, l'ovalité est considérée comme acceptable et le composant n'est pas rejeté. On reproduit cette série de mesures dans par exemple quatre plans axiaux différents pour s'assurer que le composant respecte les tolérances prédéfinies également dans les trois autres plans.

En outre, de préférence, on réalise, à partir des séries de mesures obtenues dans différents plans, un modèle numérique du profil interne ou externe du composant tubulaire à l'aide d'un programme d'ordinateur et on effectue un calcul par éléments finis sur le modèle numérique pour déterminer le comportement du composant en fonction d'au moins une contrainte physique. Le programme d'ordinateur est par exemple un logiciel de conception assistée par ordinateur (plus généralement connu sous la dénomination CAO).

Bien entendu, d'autres modes de réalisation sont envisageables sans sortir du cadre de l'invention telle que revendiquée. Ainsi, diverses modifications peuvent être apportées par l'homme du métier à l'invention qui vient d'être décrite à titre d'exemple.

**Revendications**

1.  Dispositif (20) de mesure d'un profil externe (14A) ou interne (14B) d'une portion d'extrémité (14) d'un composant tubulaire (12), comprenant un premier capteur (22) d'une mesure radiale (R) du composant tubulaire (12) par rapport à une référence prédéfinie (PO) et un support (24) apte à entraîner le premier capteur (22) selon une trajectoire circulaire dans un plan prédéfini (P) orthogonal à l'axe principal (Z) du composant (12), tel que le support (24) comprend un corps principal (26) apte à être fixé par des moyens (28) de fixation libérables au composant (12) et un arbre (30) mobile en rotation par rapport au corps (26) sur lequel est fixé un bras (32) portant le premier capteur (22) pour permettre le déplacement du premier capteur (22) selon une trajectoire circulaire à l'intérieur ou autour du composant tubulaire (12), le bras (32) étant configuré pour permettre un réglage en translation axiale et radiale du capteur (22) par rapport au composant, et tel **que** le dispositif (20) comprend un deuxième capteur (34) de mesure d'une position angulaire (θ) du premier capteur (22) pour chaque mesure radiale du premier capteur (22), les mesures radiales et angulaires des premier (22) et deuxième (34) capteurs permettant de déterminer le profil du composant (12) dans le plan prédéfini (P).

2.  Dispositif (20) selon la revendication 1, dans lequel le premier capteur (22) est de type sans ou avec contact, par exemple de type inductif ou de type à détection optique.

3.  Dispositif (20) selon l'une quelconque des revendications précédentes comprenant un moyen (33) d'actionnement pour entraîner l'arbre (30) en rotation de type à manivelle.

4.  Dispositif (20) selon l'une quelconque des revendications précédentes, dans lequel le corps principal (26) comprend un montant le long duquel les moyens de liaison libérables (28) sont réglables en position.

5.  Dispositif (20) selon la revendication précédente, dans lequel les moyens de liaisons libérables (28) comprennent des pattes de serrage aptes à serrer le composant de l'intérieur ou de l'extérieur.

6.  Dispositif (20) selon l'une quelconque des revendications précédentes, comprenant des moyens (36) de communication avec une unité de calcul d'un profil à deux dimensions à partir des mesures radiales (R) et angulaires (θ) fournies respectivement par les premier (22) et deuxième (34) capteurs.

7.  Dispositif (20) selon l'une quelconque des revendications précédentes, dans lequel le deuxième capteur (34) comprend un premier élément fixe (34A) solidaire du corps principal (26) et un deuxième élément (34B), mobile en rotation par rapport au premier élément (34A), monté sur l'arbre de rotation (30).

8.  Dispositif (20) selon la revendication précédente, dans lequel le deuxième capteur (34) est un codeur rotatif.

9.  Procédé de mesure d'un profil interne (14B), respectivement externe (14A), d'une portion d'extrémité (14) d'un composant tubulaire (12) au moyen d'un dispositif (20) selon l'une quelconque des revendications précédentes, comprenant les étapes suivantes de :

    - fixation du corps principal (26) du support du dispositif (20) au composant avec les moyens de fixation libérables de manière à ce que l'arbre (30) coïncide sensiblement avec l'axe principal (Z) du composant tubulaire (12),
    - mise en rotation de l'arbre (30) pour collecter une pluralité de mesures radiales (R1 à Rn) d'un profil interne (respectivement externe) du composant tubulaire (12) et une pluralité de mesures angulaires (θ1 à θn) correspondantes à la pluralité de mesures radiales (R1 à Rn),
    - calcul d'un profil interne (14B), respectivement externe (14A), du composant tubulaire (12) au moyen des mesures radiales (R1 à Rn) et angulaires (θ1 à θn) collectées.

10. Procédé selon la revendication précédente, dans lequel on reproduit une série de mesures dans plusieurs plans le long de l'axe principal (Z) du composant tubulaire (12).

11. Procédé selon la revendication précédente, dans lequel on réalise, à partir des séries de mesures obtenues dans différents plans, un modèle numérique du profil interne ou externe du composant tubulaire à l'aide d'un programme d'ordinateur et on effectue un calcul par éléments finis sur le modèle numérique pour déterminer le comportement du composant en fonction d'au moins une contrainte physique.

**EP 2 798 304 B1**

**Patentansprüche**

1. Vorrichtung (20) zur Messung eines Außenprofils (14A) oder Innenprofils (14B) eines Endabschnitts (14) einer rohrförmigen Komponente (12), welche einen ersten Geber (22) einer Radialmessung (R) der rohrförmigen Komponente (12) im Verhältnis zu einem vordefinierten Referenzwert (PO) und einen Halter (24) umfasst, welcher den ersten Geber (22) auf einer kreisförmigen Bahn auf einer vordefinierten Ebene (P) senkrecht zur Hauptachse (Z) der Komponente (12) mitnehmen kann, so dass der Halter (24) einen Hauptkörper (26) umfasst, welcher durch lösbare Befestigungsmittel (28) an der Komponente (12) befestigt werden kann und eine Welle (30), welche im Verhältnis zu dem Körper (26) drehbar ist, auf dem ein Arm (32) befestigt ist, welcher den ersten Geber (22) trägt, um die Bewegung des ersten Gebers (22) auf einer kreisförmigen Bahn in oder um die rohrförmige Komponente (12) ermöglicht, wobei der Arm (32) derart konfiguriert ist, dass eine Einstellung zum axialen und radialen Verschieben des Gebers (22) im Verhältnis zur Komponente möglich ist und derart, dass die Vorrichtung (20) einen zweiten Messgeber (34) einer Winkelposition (0) des ersten Gebers (22) für jede radiale Messung des ersten Gebers (22) umfasst, wobei die radialen Messungen und Winkelmessungen des ersten (22) und zweiten (34) Gebers die Ermittlung des Profils der Komponente (12) in der vorgegebenen Ebene (P) ermöglichen.

2. Vorrichtung (20) gemäß Anspruch 1, in welcher der erste Geber (22) vom Typ mit oder ohne Kontakt, beispielsweise vom Typ induktiv oder vom Typ optische Erfassung ist.

3. Vorrichtung (20) nach einem der vorstehenden Ansprüche, welche ein Betätigungsmittel (33) vom Typ Kurbel umfasst, um die Welle (30) in Drehung zu versetzen.

4. Vorrichtung (20) nach einem der vorstehenden Ansprüche, in welcher der Hauptkörper (26) eine Säule umfasst, entlang der die Position lösbarer Verbindungsmittel (28) sich einstellen lässt.

5. Vorrichtung (20) gemäß dem vorstehenden Anspruch, bei welcher die lösbaren Verbindungsmittel (28) Klemmfüße umfassen, welche die Komponente von innen oder außen einklemmen können.

6. Vorrichtung (20) nach einem der vorstehenden Ansprüche, welche Kommunikationsmittel (36) mit einer Einheit zur Berechnung eines zweidimensionalen Profils ausgehend von den radialen Messungen (R) und Winkelmessungen ($\theta$) umfasst, welche von den ersten (22) bzw. zweiten (34) Gebern geliefert werden.

7. Vorrichtung (20) gemäß einer der vorstehenden Ansprüche, in welcher der zweite Geber (34) ein erstes fest installiertes Element (34A) umfasst, welches fest mit dem Hauptkörper (26) verbunden ist und ein zweites Element (34B), welches im Verhältnis zum ersten Element (34A) drehbar ist und auf der Rotationswelle (30) angebracht ist.

8. Vorrichtung (20) gemäß dem vorstehenden Anspruch, bei dem der zweite Geber (34) ein Inkrementalgeber ist.

9. Verfahren zur Messung eines Innenprofils (14B), bzw. eines Außenprofils (14A) eines Endabschnitts (14) einer rohrförmigen Verbindung (12) mit einer Vorrichtung (20) gemäß einem der vorstehenden Ansprüche, welches folgende Schritte beinhaltet:

   - Befestigung des Hauptkörpers (26) des Halters der Vorrichtung (20) an der Komponente mit Hilfe lösbarer Befestigungsmitteln, so dass die Welle (30) wesentlich mit der Hauptachse (Z) der rohrförmigen Komponente (12) übereinstimmt,
   - Drehung der Welle (30), um eine Mehrzahl radialer Messungen (R1 bis Rn) eines Innenprofils (bzw. Außenprofils) der rohrförmigen Komponente (12) und eine Mehrzahl Winkelmessungen ($\theta$1 bis $\theta$n) zu sammeln, welche der Mehrzahl der radialen Messungen (R1 bis Rn) entspricht,
   - Berechnung eines Innenprofils (14B), bzw. eines Außenprofils (14A) der rohrförmigen Komponente (12) mittels erfasster radialer Messungen (R1 bis Rn) und Winkelmessungen ($\theta$1 bis $\theta$n).

10. Verfahren gemäß dem vorstehenden Anspruch, in welchem eine Reihe Messungen auf mehreren Ebenen entlang der Hauptachse (Z) der rohrförmigen Komponente (12) vorgenommen wird.

11. Verfahren gemäß dem vorstehenden Anspruch, in welchem ausgehend von einer Reihe Messungen auf unterschiedlichen Ebenen mit Hilfe eines Computerprogramms ein digitales Modell des Innen- oder Außenprofils der rohrförmigen Komponente erstellt und anhand des digitalen Modells eine Berechnung pro fertigen Elementen erstellt wird, um das Verhalten der Komponente je nach mindestens einer physischen Belastung zu ermitteln.

**Claims**

1. A device (20) for measuring an external (14A) or internal (14B) profile of an end portion (14) of a tubular component (12), comprising a first sensor (22) for making a radial measurement (R) of the tubular component (12) with respect to a pre-defined reference (PO) and a support (24) which can drive the first sensor (22) in a circular trajectory in a pre-defined plane (P) orthogonal to the principal axis (Z) of the component (12), such as the support (24) comprises a principal body (26) that can be attached to the component (12) via releasable attachment means (28) and a shaft (30) which is movable in rotation with respect to the body (26) on which an arm (32) carrying the first sensor (22) is attached to allow displacement of the first sensor (22) in a circular trajectory inside or about the tubular component (12) with respect to the component, and such as the device (20) comprises a second sensor (34) for measuring an angular position ($\theta$) of the first sensor (22) for each radial measurement of the first sensor (22), the radial and angular measurements of the first (22) and second (34) sensors allowing the profile of the component (12) in the pre-defined plane (P) to be determined.

2. A device (20) according to claim 1, in which the first sensor (22) is of the contact or contactless type, for example of the inductive type or of the optical detection type.

3. A device (20) according to any one of the preceding claims, comprising actuating means (33) of the crank type to drive the shaft (30) in rotation.

4. A device (20) according to any one of the preceding claims, in which the principal body (26) comprises an upright along which the position of the releasable attachment means (28) can be adjusted.

5. A device (20) according to the preceding claim, in which the releasable attachment means (28) comprise clamping lugs which can clamp the component on the inside or outside.

6. A device (20) according to any one of the preceding claims, comprising means (36) for communicating with a unit for computing a two-dimensional profile from radial (R) and angular ($\theta$) measurements respectively provided by the first (22) and second (34) sensors.

7. A device (20) according to any one of the preceding claims, in which the second sensor (34) comprises a first fixed element (34A) which is integral with the principal body (26) and a second element (34B) which is mobile in rotation with respect to the first element (34A) and which is mounted on the rotary shaft (30).

8. A device (20) according to the preceding claim, in which the second sensor (34) is a rotary encoder.

9. A method for measuring an internal (14B), respectively external (14A), profile of an end portion (14) of a tubular component (12) using a device (20) in accordance with any one of the preceding claims, comprising the following steps of:

   • fixing the principal body (26) of the support for the device (20) to the component using the releasable fastening means such that the shaft (30) substantially coincides with the principal axis (Z) of the tubular component (12);
   • rotating the shaft (30) to collect a plurality of radial measurements (R1 to Rn) of an internal (respectively external) profile of the tubular component (12) and a plurality of angular measurements ($\theta$1 to $\theta$n) corresponding to the plurality of radial measurements (R1 to Rn);
   • computing an internal (14B), respectively external (14A), profile of the tubular component (12) using the collected radial (R1 to Rn) and angular ($\theta$1 to $\theta$n) measurements.

10. A method according to the preceding claim, in which a series of measurements is produced in a plurality of planes along the principal axis (Z) of the tubular component (12).

11. A method according to the preceding claim, in which, starting from the series of measurements obtained in different planes, a digital model of the internal or external profile of the tubular component is produced using a computer program and a finite element computation is carried out on the digital model to determine the behaviour of the component as a function of at least one physical constraint.

Fig. 1

Fig. 2

Fig. 3

Fig. 5

**Fig. 4**

**Fig. 6**

## RÉFÉRENCES CITÉES DANS LA DESCRIPTION

### Documents brevets cités dans la description

- EP 2194358 A
- US 4821425 A
- US 4297034 A
- US 5485678 A
- US 4521968 A